# EUROPEAN PATENT APPLICATION

(11) **EP 3 496 014 A1**
(43) Date of publication of application: **12.06.2019**
(21) Application number: 17206323.2
(22) Date of filing: 11.12.2017
(51) Int. Cl.: G06Q 10/04, G06Q 10/06

(54) **DYNAMIC CHEMICAL NETWORK SYSTEM AND METHOD ACCOUNTING FOR INTERRELATED GLOBAL PROCESSING VARIABLES**

(71) Applicant: Evonik Industries AG, 45128 Essen (DE)
(72) Inventor: DINGERDISSEN, Uwe, Dr., 64342 Seeheim (DE); ENGELS, Florian, 60322 Frankfurt (DE)
(74) Representative: Evonik Patent Association

(57) **Abstract**

The present invention relates to a method and/or system useful for predicting and/or forecasting and for production and business planning/forecasting in the global chemical industry. The method and system take into account aspects of global trade and the interrelatedness of value chains in which feedstocks and outputs are interrelated through one or more chemical processes. The method and system provides a useful tool for business planners and business execution whereby the sensitivity of variables affecting different value chains may be expressed by the interrelatedness of the chemical processes and/or business environment.

## Description

### FIELD OF THE INVENTION

The present invention relates to a method and system for modeling, predicting and/or forecasting production and business in the global chemical industry.

### BACKGROUND OF THE INVENTION

The recent decades have seen cross-border consolidation of producers in several industries that provide base materials or feedstock materials (e.g., upstream materials) for further processing (e.g., downstream and consumer products) such that the producers in these industries have a global presence. The necessity of utilizing cutting edge technology and having negotiating power to obtain advantageous feedstock pricing favors companies and corporations having a presence on several continents. A global presence permits a company to take advantage of local conditions to maximize profits across borders. These costs and pricing advantages relate not only to finished products but also to the raw materials and feedstocks needed to produce the products.

The chemical industry is an industry in which companies having a global business presence and/or a leading business position (e.g., as measured by revenue and/or tonnage of products delivered) have sales, production and feedstock sourcing locations located all over the world. Integrated supply chains and delivery networks provide significant advantages to chemical industry producers having a global presence. An integrated supply chain may include multiple feedstock sources, chemical manufacturing processes and delivery/transport infrastructure that supports a flexible manufacturing strategy whereby a company may balance its worldwide production over a number of manufacturing facilities throughout the world. When feedstock is available at advantageous pricing on one continent and transport options from continent-to-continent are favorable, a significant financial advantage can be realized by weighting production towards the low cost continent. Products made in excess of local demand may be exported to other continents or may be utilized for forming other downstream products.

Chemical companies that have a global manufacturing presence often rely on similarly equipped production facilities located on different continents. The duplication of manufacturing technology and know-how distributes the costs of research and development over a greater production base and leads to an overall lower unit cost of production.

Additional cost/pricing advantages can be achieved by operating multiple manufacturing facilities in an integrated manner to further leverage manufacturing technology and advantageous feedstock pricing. It has been relatively common in the chemical industry for companies having a global presence to produce a diverse family of interrelated chemical products at multiple manufacturing facilities located on different continents, preferably grouped locally to minimize distance between manufacturing units. This in turn has led to the development of megaprojects in which entire production systems and production chains are concentrated in a single manufacturing location. A global chemical company may build or maintain a manufacturing facility that vertically and horizontally integrates a plurality of manufacturing processes. A first process can include, for example, a cracker facility that produces ethylene from natural gas. The ethylene may subsequently be used to manufacture other small molecule feedstocks or may be used as a feedstock to form a finished product such as polyethylene.

As a consequence of this integration the complexity of manufacturing operations and production planning has increased substantially in recent years. However, companies with several global manufacturing facilities are able to realize significant economic advantages by geographically balancing manufacturing across different locations and by planning the installation and upgrade of facilities based on foreseeable or predictable events or developments in the industry.

Business planning for future growth is a common business practice in the chemical and related industries. Business planning is relatively simple for companies that have limited geographical presence and/or a limited product range. A manufacturer that knows from past experience that demand for a particular chemical product predictably and reliably increases by a certain amount per year (e.g., 3%) can easily plan for needed improvements in manufacturing, e.g., upgrades and/or new production facilities, through a linear calculation based on the observed growth rate and the capacity of existing facilities.

The reality for global companies that are affected by variations in manufacturing capability, sales and sourcing operations across the world is much more complex. Even under relatively simple planning assumptions (e.g., global growth of a particular product is predictable based on past sales), unexpected local events may be difficult to take into account and adjust. For example, a global company that produces polyethylene on three continents may be able to determine with relative accuracy the global growth rate for its polyethylene business. It becomes more difficult, however, for the company to accurately predict or plan for changes that account for different demand in subgroups of products (e.g., high molecular weight polyethylene in contrast to low molecular weight polyethylene). Planning becomes even more complex when supply and pricing for different sources of feedstock (e.g., naturally-derived hydrocarbons) must be taken into account. For example, the price of mineral hydrocarbons on a continent such as North America (e.g., natural gas) may be substantially lower than the price of mineral hydrocarbons (e.g., heavy crude oil) on another continent (e.g., the Middle East). As the pricing advantage swings between natural gas and heavy crude oil feedstocks, it becomes more difficult for a global company to forecast production planning with accuracy, plan for changes in manufacturing technology and/or take steps to protect feedstock sources and keep customers informed of pricing expectations.

The complexity of modern global chemical manufacturing can be illustrated by the manufacturing and business processes used for propylene which is a monomer used throughout the world as a feedstock for making a family of polymers generally identified as polypropylene (PP) and/or propene copolymers (co-PP)). Companies that manufacture propylene globally have several processing technologies at their disposal. The favored process is not the same globally, however. Regional preferences and availability of feedstocks, availability of manufacturing technology/facilities and local regulation favor different manufacturing processes on different continents.

Propylene is often manufactured in North America using a low molecular weight olefin material (such as ethane (C2), propane (C3) or butane (C4)). A variety of different processes can be used to convert these relatively simple chemical building blocks into propylene such as olefin metathesis, dehydrogenation and cracking. The C2, C3 or C4 feedstock materials are widely and inexpensively available as derivatives of natural gas materials. This contrasts with the production techniques used to manufacture propylene in other regions such as Europe where propylene is conventionally derived from naphtha (e.g., hydrocarbons obtained by distillation of mineral organic substances such as coal, shale, or petroleum) which is a carbon-based material typically obtained from crude oil; directly or by a combination of techniques that includes first cracking a hydrocarbon raw material then metathesizing the resultant olefin mixture. This process has gained favor in Europe due to the greater availability of heavy crude oil hydrocarbon feedstocks and the lack of availability of low priced natural gas.

A company acting as a global supplier of propylene must be able to balance the production of propylene on different continents in the most cost effective and business savvy manner based at least in part on the availability and pricing of entirely different feedstock streams and thus manufacturing processes and technologies. Such planning is substantially more complex than planning based on a single feedstock because it must take into account the company's manufacture of other products that likewise utilize light olefin feedstocks or feedstocks derived from crude oil. For example, naphtha is commonly used as a feedstock for making cumene and benzene which are commonly used as a starting point for making phenol which is used to make the polymerizable monomer bisphenol A which itself is utilized in a downstream process for making polycarbonate. Planning and forecasting for propylene production must take into account effects on other processes.

The same is the case for C2, C3 and C4 feedstock streams. A company manufacturing these inputs may wish to make not only propylene (or the polymerized form PP) but also other polymers such as polyethylene, polybutylene or copolymers thereof. It is therefore readily evident that these products, i.e., propylene, PP and polycarbonate may have interrelated feedstock streams. Maximizing the efficiency of a company's manufacturing and feedstock resources requires balancing production between propylene, light olefins, cumene, bisphenol A and/or polymeric materials such as polyethylene. Because global chemical companies may manufacture hundreds of different chemical compounds and/or derivatives thereof, the production planning and economic challenges of integrated global manufacturing are complex and interrelated.

In today's global chemical industry it is rarely the case that a chemical supply or feedstock stream can be considered only in a linear fashion. Feedstock supply, energy supply, capacity availability, local economic circumstances and consumers' tastes may differ dramatically over short periods of time and/or on different continents. As a consequence, global chemical companies have great difficulties planning and forecasting for capital expenditure, feedstock needs and regulatory issues for chemical products and/or chemical manufacturing processes that are integrated locally and/or across continents.

It is one objective of the present disclosure to provide a method and system for global supply chain forecasting, production planning, production balancing, and resource management that takes into account both internal factors (e.g., capacity utilization) and external factors (e.g., feedstock availability, local politics, environmental regulation, investor demand and consumer tastes).

### DESCRIPTION OF THE RELATED ART

US 2002/0169658 describes a modeling and analysis tools that are intended to make strategic decisions in changing market environment. It describes processes and algorithms that include linear presentation and representation of processes and decision making. The process is applied repetitively to compare the results of different simulations and does not represent a live model of an industry operating on a global scale with interrelated variables.

US 2017/0178255 describes a method and process for optimizing variables associated with two concurrently operated chemical processes between which one or more products maybe interchanged. The method is focused on facility optimization and the identification of particular conditions relating to temperature and pressure, for example, to search for an optimum balance of material between manufacturing facilities.

US 2017/0097616 describes a tool and method for supplementing the optimization of an objective function relating to the economic performance of hydrocarbon processing systems. The purpose of the method and tool described is to provide an improved means for a user to identify the effect of a variable such as product cost on the ultimate outcome of a particular chemical conversion process. The method is focused on economic outcomes.

US 2014/0031963 describes a system for chemical production scheduling. An optimum schedule is determined by balancing the factors and inputs with the predicted demand for a particular process. The output of the process disclosed includes instructions for steering or operating the equipment used in a chemical manufacturing facility, for example.

US 2009/027606 describes an online modular linear program method and system for optimizing manufacturing facility operations. The method and system described rely heavily on linear programming to identify a calibrated state-state solution. New operating conditions and/or operating targets can be formulated based on optimized steady-state solution.

US 5,428,740 describes a data processing system that is used for simulation. The processing system may be represented by computer code that operates on and carries out calculations based on active data groups. A convenient graphic user interface is provided to permit a user to quickly view and understand the results of the calculations and sensitivities in response to quickly made changes.

### SUMMARY OF THE INVENTION

The invention is directed to a computer-implemented method for production planning, comprising: saving a dynamic global industry model into a memory of a computer system, wherein the dynamic global industry model has a plurality of variables corresponding with objective historical data at a time t0, inputting at least one changed value representing a future time t1 for one or more of the variables, processing, using processing circuitry of the computer system, based on the dynamic global industry model and the variables at times t0 and t1, one or more chemical network values, and outputting a production plan based on the chemical network values.

In one embodiment the method and system of the present disclosure may be implemented in a software programmed system that functions to model and/or simulate the global chemical industry. In this form the method and system are particularly useful for chemical companies that participate in the chemical industry trade; including purchasing raw materials, investing, transporting, consulting, manufacture of chemical materials, planning and analysis. The method and system can provide, as outputs, the outcomes of making changes to particular chemical processes and/or the effects of external variables that are ordinarily out of the control of chemical companies such as public perception, politics and macroeconomic factors. The method and system are useful for decision support in areas such as capacity utilization, investment, business spectrum, merger and acquisition. The method and system are also useful for defining particular activities directed to particular chemical value chains, supply chains, or product cycles.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Figure 1 shows a representation of the interrelatedness of integrated chemical manufacturing processes;
Figure 2 shows a dynamic model with relationships between processes for forming methanol, ethylene and propylene;
Figure 3 describes a generalized picture of the global chemical industry;
Figure 4 shows the balance of the chemical industry as it is reflected in world trade flows;
Figure 5 describes aspects of a representation of factors which affect production and business planning in the global chemical industry;
Figure 6 shows a representation of the chemical industry known activity;
Figure 7 shows the interrelatedness that is characteristic in the global chemical industry;
Figure 8 shows a balancing effect or variable;
Figure 9 shows how external forces or variables can affect the flow of inventory;
Figure 10 shows feedback loops with respect to the interrelationship between price, demand and supply;
Figure 11 shows a representation of a particular product cycle and/or value chain of methanol; and
Figure 12 shows a computer system on which the method and system of the invention can be implemented in exemplary embodiments.
Figure 13 shows a plurality of inter-connected and inter-related product cycles and/or value chains.

### DETAILED DESCRIPTION OF THE PREFERRED EMBODIMENTS

Referring now to the drawings, wherein like reference numerals designate identical or corresponding parts throughout the several views.

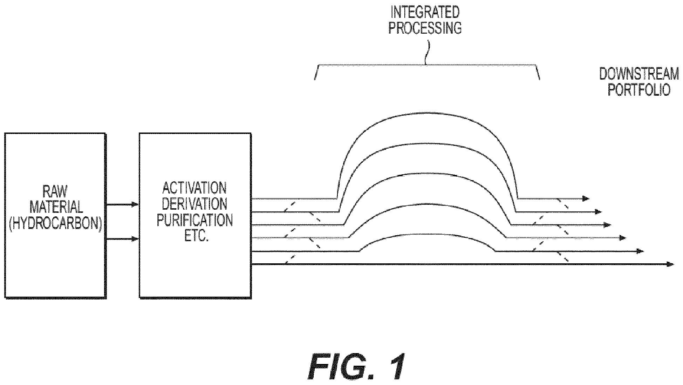

Figure 1 shows a representation of the interrelatedness of integrated chemical manufacturing processes, demand for chemical products and availability of raw materials for forming chemical products on a global basis. On the left-hand side Figure 1 describes the sources of raw material inputs such as hydrocarbons in the form of for example natural gas and/or crude oil. Pricing and availability of these raw materials is dependent on many variables both objective and subjective. Objective variables may include depletion rates of existing hydrocarbon reserves, pricing history and pricing of forward contracts, chemical composition, political stability of nations from which raw materials are sourced, and current demand for raw materials on both local and global bases. In addition a variety of other factors may affect the suitability of hydrocarbon resources locally or globally. Soft factors such as demand from consumers for renewable materials may substantially weaken the demand for hydrocarbon-derived raw materials in the future. However, it is uncertain whether such decreased demand from hydrocarbon-derived raw materials will result in cumulative increases or decreases in production capacity or pricing. Each of the aforementioned variables can be represented mathematically and may be given a certain weight and/or growth factor to account for changes over time.

Next the raw materials are converted to one or more useful feedstocks or chemical inputs. Large processes such as ethane crackers may be used to form and isolate desired feedstocks such as ethylene, propylene and/or butylene. Likewise, processes such as distillation and functionalization of crude oil-derived raw materials may be used as a basis for obtaining the building blocks of other chemical products. Many variables may affect the derivation of the hydrocarbon inputs. Such variables include the availability and cost of energy, both locally and globally, and the availability and freedom to use desirable technology. This complexity is desirably accounted for in a manner that is meaningful and can be accounted when planning/forecasting production or business investment.

Once the chemical feedstock (for example ethylene) has been prepared and is available locally, it may be used in a series of different processes. Ethylene may be used, for example, to form polyethylene or may be used as a feedstock for forming other polymer monomers such as butylene and propylene. Each of these processes may be represented as a cycle in which the input (ethylene) is chemically derived, purified and/or functionalized to form other monomers or polymers. Similar cycles/processes may be used to represent the use of ethylene to manufacture downstream products such as polyethylene. Because ethylene is such a widely used feedstock it may be involved in an almost limitless number of chemical processes for forming intermediates and finished products. Each of the processes that utilizes the ethylene may be affected by a separate set of variables and conditions which must be taken into account for production planning/forecasting and capital investment purposes. As a consequence, as shown in Figure 1, the planning and objective description of the use of and flow of raw materials, chemical feedstocks, chemical manufacturing processes and product outputs for a global chemical company is extremely complex.

Therefore, in a preferred embodiment, the processing according to the present invention includes representing the dynamic global industry model with a plurality of interrelated material flows.

The chemical cycles/processes may be integrated to form a wide pallet of chemical products. Variables may act separately on individual or independent production cycles/processes or one production cycle may affect another production cycle thereby further complicating production and business planning/forecasting. In this aspect production planning/forecasting has a linear aspect (for example moving linearly from the hydrocarbon input raw material, to an olefinic material, to an intermediate (e.g., butylene) then to a finished product (ethylene/butylene copolymer)). In other aspects the planning/forecasting of a global operation has a dynamic aspect where changes in one or more variables for particular product or processes cascades to other products or processes. For example, a variable effecting the production of MMA may likewise effect the production of polyethylene (e.g., interrelated variable dynamically affect manufacturing, sales and business planning/forecasti ng).

Thus, in a further preferred embodiment, the plurality of global variables are interrelated such that a change in a first variable changes both a first output and a second output, wherein the first output changes linearly with the first variable, and the second output changes non-linearly with the first variable and linearly with a second variable.

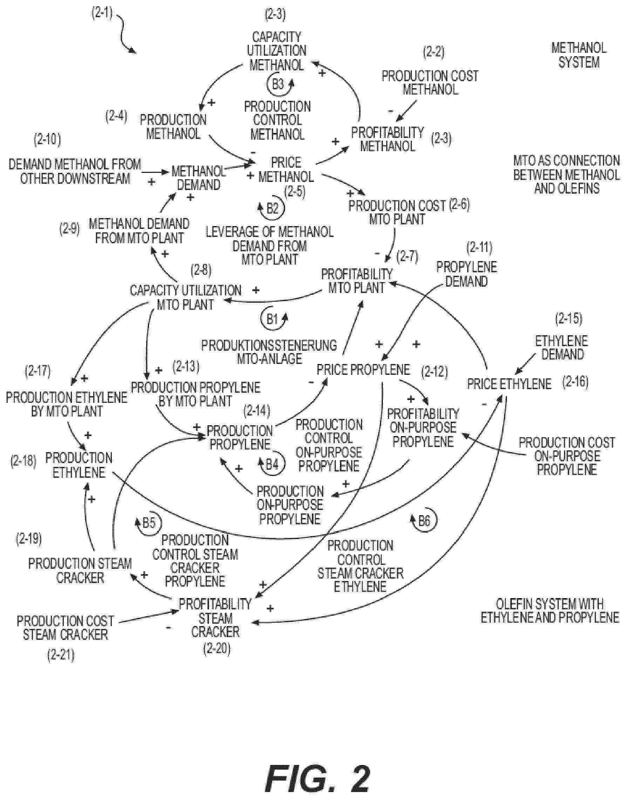

Figure 2 shows a dynamic model with relationships between processes for forming methanol, ethylene and propylene. Figure 2 demonstrates the interrelatedness of the different processes and variables that affect each process. Contrary to conventional linear or non-dynamic analysis, the effect of one variable or change in one production process is reflected in one or more of the other production processes. The process for forming methanol (2-1) takes into account variables such as the capital cost for the methanol plant (2-2), the profitability of the methanol plant (2-3), the capacity of the methanol plant (2-3) and the output of the methanol plant (2-4) all which affect the price of methanol (2-5). The price of methanol of course has a substantial effect on the efficiency and utilization of an MTO process for forming ethylene and/or propylene feedstocks (MTO - methanol to olefins).

The MTO process is a conventional process in which an incoming feedstock, in this case methanol, is used to form other feedstocks useful in the chemical industry such as ethylene and propylene. Of course, methanol may be utilized separately as a solvent or as a feedstock input to other processes such as the formation of MTBE (methyl-t-butyl-ether) in which methanol is reacted with isobutene to form MTBE. The MTBE system (not shown in Figure 2) is one of the processes that may be operated linearly or cumulatively with the process described in Figure 2 (for example the use of methanol as an input to forming light olefins such as ethylene and propylene).

The MTO process is directly linked to the methanol process/system through the price of methanol. The methanol price variable is coupled with other variables such as the capital cost for a MTO process/plant, the profitability of the MTO plant, capacity of the MTO plant (2-8), demand for methanol (2-9) and the utilization of downstream methanol formed in the MTO process (2-10). The MTO process is also affected by cycles of other variables such as the demand for propylene (2-11), the market price of propylene (2-12), the production output of propylene (2-13) as it relates directly to the MTO process, and the production of propylene from other processes (2-14). The production of ethylene has a similar variable cycle such as the demand and price of ethylene ((2-15) and (2-16), respectively), production of ethylene from the MTO process (2-17), and the production of ethylene from other sources (2-18).

As an example Figure 2 demonstrates the interactability and interrelatedness of a different source of ethylene, i.e., ethylene from a steam cracker (2-19) which itself is affected by a cycle of variables including the profitability of the process (2-20) and the capital costs associated with the process (2-21). Consideration of these variables provides a dynamic picture of the interaction and effect of variables of one system on one or more other systems. The dynamic nature and interactivity of the different processes provides a more accurate picture and basis for determining and/or estimating the effect of changes in one or more variables on all systems, not just a single system as might be the case for a linear production and/or business planning/forecasting method. Separately from the variables identified in Figure 2, a number of additional higher level variables may have an effect on the interactive production cycles of Figure 2. For example, the availability of natural gas may substantially affect the profitability of the steam cracker (2-20), e.g., depending on the maturity of forward supply contracts and an average exercise price. Other variables such as up time or down time of the steam cracker may further affect the conclusions and estimations from this dynamic system.

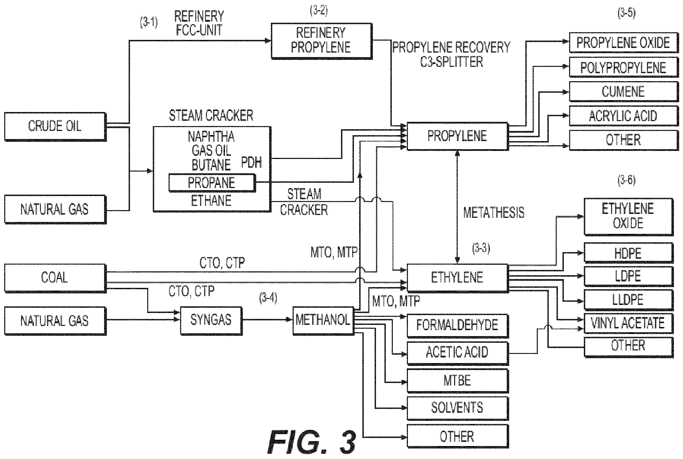

Figure 3 describes a generalized picture of the global chemical industry as it interconnects and interrelates the production of raw materials such as mineral hydrocarbon sources with consumer demand for product and/or markets such as downstream feedstocks. The portion of the overall process related to hydrocarbon sourcing and derivatization to provide useful feedstocks is represented by section (3-1). Raw material inputs such as crude oil, natural gas, coal and/or ethanol (for example from biomass or fermentation), are passed through a series of process steps to form a desirable chemically active feedstock such as propylene and methanol (3-2). The formation of methanol may occur through various intermediates such as syngas (3-3). Dynamic and intersystem crossing occurs with processes and/or chemical manufacturing units to form materials such as ethylene using steam crackers and/or coal-to-olefins (CTO) processes which may be operated using different types of hydrocarbon inputs such as natural gas or coal, or obtained by processes that form an intermediate such as syngas (3 4).

Downstream processes may then utilize the propene as a feedstock for further derivatization and activation. For example, propene can be reacted with oxygen to form propylene oxide (3-5). This in turn may undergo further reaction to form propylene glycol which may be used in downstream products, for example as a solvent or additive

As noted herein, Figure 3 represents an idealized case with linear relationships existing between the processes and products such as coal, CTO process, ethylene and polyethylene (HDPE, LDPE, LLDPE) (3-6). Some dynamic intercrossing of processes and products such as that for the formation of propylene and ethylene to form polypropylene and polyethylene is described, however substantially greater degree of additional interactivity may exist with processing units such as syngas which may be alternately used as a feedstock in processes for making fuels (for example the Fischer-Tropsch process), acetic acid, formaldehyde, methanol, alkyl carbonates, which may be used in applications such as fertilizers, pharmaceuticals manufacturing, solvents and as building blocks for other organic materials.

A typical chemical company having global business interests cannot rely only on the relationships described in Figure 3 as a basis for production and business planning. The complex interactivity of the raw materials, intermediates and final products described in Figure 3 is linked to many more different processes and different markets that are not showing in the drawing. The processes of Figure 3 must therefore be considered in conjunction with the many other processes that are affected by and/or share variables that have an influence on or are affected by the processes of Figure 3. Such processes include other uses and/or derivations of the raw material and consumer demand of the final products. A meaningful financial, business or production plan cannot be derived only from the processes outlined in Figure 3. Instead, such processes are considered dynamically as an aspect of the present disclosure to thereby provide a means and method for carrying out production planning and business planning specific to the chemical industry.

In other aspects of the invention the processes described in Figure 3 may be interlinked by a material balance. For example, the carbon input from the raw material inputs such as oil, shale gas and the like may be compared with the carbon outputs such as polymers and intermediates on the right-hand side of Figure 3. In order for such internetworked processes to run efficiently and sustainably a material balance must exist between the carbon inputs and the carbon outputs. There are many ways material balance can be depicted such as through molar carbon balance, mass carbon balance or similar balances relating to the amount of hydrogen input. Likewise, as a means for determining cost and/or profitability variables such as the cost of inputs, the cost of capital, production capacity and production downtime may be considered as a basis for describing the nature and balance of the processes and/or cycle of processes described in Figure 3 and related processes.

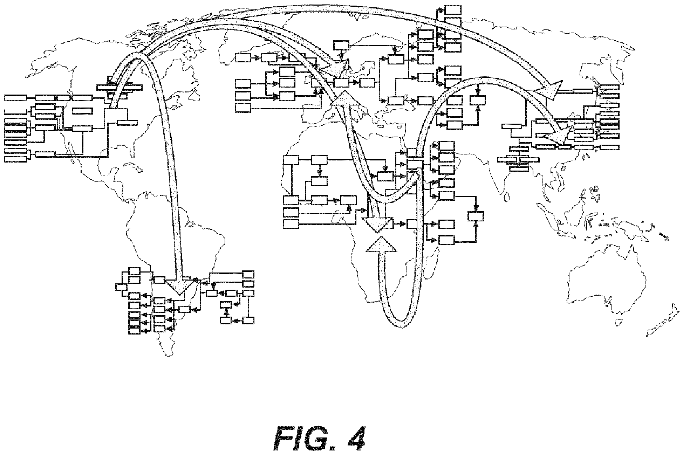

Figure 4 shows the balance of the chemical industry on a different, higher level as it is reflected in world trade flows. Exports from one country or region are used to fuel or feed processes in other regions and intermediates and final products flow back and forth between regions. Competent production and business planning/forecasting includes a component that permits the balancing of outputs, imports, exports and re-imports that are associated with a global chemical company's businesses. Rebalancing of these inter-region areas can be accomplished by or be affected by variables that have both objective and subjective components. Subjective components include variables and risk factors such as political climate, expected regulatory level of activity, and global economic projections. Objective criteria may include variables such as regional production capacity, regional pricing for feedstock inputs and energy, demographics, and finalized trade quotas. Such variables and observations between regions provide a company with the means and capability of adjusting trade flows to take into account changing economic circumstances. Of course, trade flows can likewise be balanced to take into account competitive pressures and/or the opening of new markets.

Interrelated feedstocks, intermediates, products and corresponding are often viewed as a value chain in the chemical industry. The particular materials directly involved in a value chain are often considered as the only or major variables that affect decisions relating to the value chain, for example relating to the demand, pricing and future business climate for the inputs, intermediates and products that are particular to the value chain. However, the chemical industry is especially interrelated and such a linear or restricted view of a value chain is often too narrow. If all other variables outside the value chain were to remain the same, the predictive value of the value chain and the confidence of variables used to modify the value chain would be high. However, focusing only on isolated value chains does not take into account the many other variables that may substantially affect the variables that directly relate to a value chain such that the predictive value and representational accuracy of the value chain is substantially diminished.

Features such as feedback loops that directly or indirectly connect different value chains (or product cycles as noted herein) must be taken into account to improve the representational accuracy of value chain models and their respective predictive accuracy. A more complete model or mathematical representation of the global chemical industry is desirable in order to better predict and make production planning or business planning decisions that take into account variables outside of an immediate value chain/product cycle.

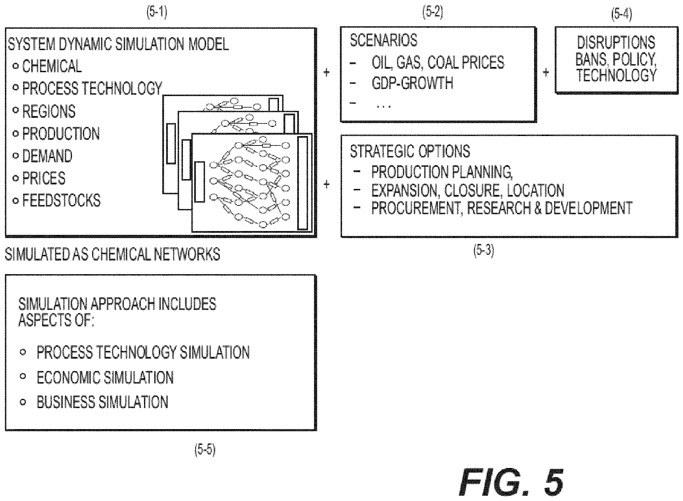

Figure 5 describes aspects of a representation of factors which affect production and business planning in the global chemical industry. A variety of models or algorithms can be utilized to represent particular value chains or product cycles taking into account, for example, the particular nature of chemicals, the process technology, region of manufacture and/or supply, production capacity, demand (both intermediate demand and consumer demand), prices both of feedstocks, intermediates and finished products and feedstocks (for example currently available materials, materials that are in delivery or processed or materials that have not yet been recovered such as hydrocarbons).

The plurality of product cycles and/or value chains may then be subject to a plurality of variable prices (or scenarios) in which different variables are modified to model or represent predicted or potential changes in the business environment. Such variations can represent the prices, availability and/or demand of feedstocks such as oil and gas, and likewise macroeconomic data such as GDP (gross domestic product), growth, inflation, business expectation indices, and the like.

Strategic operations (5-3) can then be assessed. Options such as planning for future production, planning for future supply interruptions, the desirability and economic feasibility of expansion, plant shutdowns, locations and conditions of new capacity, ship procurement (for example procurement of feedstocks by supplier), inventory, geographic location and/or internal search. Long-term variables and effects such as research and development may also be included. This is especially useful in markets that are disrupted by a new technology such as the utilization of feedstocks derived from bio-sources, e.g., bio-fermentation and biomass.

The analysis and the impact on the global chemistry industry of variables that are beyond the control of research and development and production planning include items such as regulation, public policy and public perception. Regulations that restrict or prohibit the use of particular plasticizers or food additives often mature unexpectedly. Compounds such as phthalates which for many years were used as plasticizers and intermediates in the chemical industry may suddenly be fated to obsolescence or prohibition. Such disruptions can substantially alter the production capacity and demand variables associated with a particular chemical cycle or value chain. The same is true for policy judgements and political activity both at a regulatory level and at a grass roots level. In order to enhance the representational accuracy and predictive value of production planning such disruptions are preferably included and may be modeled with simulative or algorithmic techniques and/or models.

In view of the wide variety of variables and factors that can affect the global chemical industry, the representation of economic circumstances can be used for purposes such as production and business planning and preferably include factors that may typically be outside the realm of conventional factors and computational technique, especially linear modeling. Processes such as product technology simulation have been conventionally used in the chemical industry to represent a discrete product cycle or value chain. Such process technology simulation is, however, used in a manner that is restricted to a particular production facility for the purpose of testing safety and setting safety guidelines for operational procedures. Coordinating and integrating a plurality of such process technology simulations that cover the pallet of products offered by a particular global chemical company is advantageous for improving the predictive value of production and business planning.

Preferably the integrated process technology simulations or calculations are further modified with economic simulations that take into account macroeconomic business environment conditions. In a period of global business contraction (such as that in the post-2008 period), an economic simulation or representation through modeling must be able to take into account decreased demand and/or decreased pricing power that may substantially affect the production and business planning/forecasting for a global chemical company. The economic simulations must additionally be capable of reaching forward to a period of time when growth is reinitiated and demand or pricing power increases.

The capability to reach forward and make predictions of future business conditions is preferably integrated with a business simulation, algorithm or model which takes into account the activities of competitors, partners and customers within the global chemical industry. The activities (actual and/or potential) of competitors may affect demand and capacity. While it is often difficult to predict the effect of particular activities of a competitor in any value chain or product cycle the uncertainty and/or impact of a particular activity can be represented mathematically.

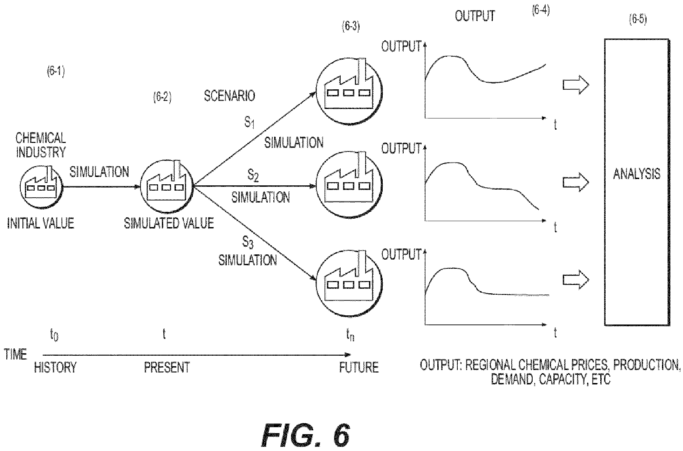

The approach discussed above is represented diagrammatically in Figure 6. The starting point (6-1) represents the chemical industry in its present state. In this representation the global chemical industry includes all known activity including feedstock production, production and consumption of intermediates, finished product production, and demand. In embodiments of the invention the chemical industry may be divided or represented as particular areas or sub-industries such as the polymers, inorganic chemicals, consumer chemicals, pharmaceuticals, basic chemicals, specialty chemicals, petro chemicals, and the like. If necessary these sub-areas of the chemical industry can be further divided into sub-specialties. For example in the polymer chemical industry particular families of polymers such as polyvinyl chloride, polyolefins (e.g., polyethylene, polypropylene, polybutylene and the like), polystyrene, polycarbonate, thermoplastics and thermosets may be specified as a basis for modeling, simulation and/or business planning/forecasting.

The initial value of the chemical industry or sub-industry specialty is used as a base line at t0 from which a simulation or production planning/forecasting is projected forward in time. Preferably the production planning, simulation or business planning/forecasting is carried out not only with values at t0 that represent the historical development of the industry or sub-industry specialty. Historical values are especially useful as a baseline or starting point for defining trends and predicting or calculating natural growth in particular product cycles, value chains, chemical families or regional demand. In any case, the initial value t0 is then used for determining a simulated value, algorithmically or computationally, to verify that the historical values in fact have predictive value for determining the present value of variables and conditions within the global chemical industry overall or in particular subspecialties or subindustries. Upon verifying that the historical values in fact accurately predict or calculate values that are representative of the present conditions in the global chemical industry (e.g., confirmed by comparison with contemporary data and business observation), a series of business and economic scenarios may be used to represent changes in one or more variables such as consumer demand, GDP growth, regulatory restrictions and the like. The resultant values describe the chemical industry under different stresses and can be used to determine the sensitivity of business and/or production planning/forecasting to a particular variable or business condition.

For example, a regulatory ban on a family of chemicals such as phthalates will necessarily result in a substantial drop in demand for phthalates products and therefore the price of phthalates. In addition a number of co-variables will also be affected by a phthalates ban but perhaps not in the manner that would otherwise be expected. A restriction or prohibition on phthalate plasticizers may free up carbon resources for the manufacture of other chemicals. While this might generally be thought to lead to a general decrease in feedstock prices and thus prices for other product cycles or value chains, this change may be accompanied by a concurrent increase in capacity utilization of other chemicals (e.g., because the capacity previously dedicated to the manufacture of phthalates has been idled and capacity utilization for phthalate substitutes will increase). Therefore, due to the interrelatedness of product cycles and value chains, it is not possible to conclusively determine or predict the impact that a prohibition or regulatory restriction will have on the global chemical industry as a whole. While a conventional single value chain representation may accurately depict the effect of prohibition and/or regulatory restriction on phthalates, it is unable to reflect the impact on directly or indirectly related product chains and product cycles. A competent representation of the global chemical industry or business environment for production and business planning/forecasting purposes can only be achieved when all product cycles are interrelated and taken into consideration through inclusion of variables representing demand, feedstock pricing, inventories, etc. for each interrelated and ancillary value chain.

In Figure 6 the results of the simulation or calculation are represented as an "output" (6 4) from which an analysis (6-5) can be derived. The output may represent any variable, not just chemical output. For example, the output may be a representation of a calculated future demand, calculated future pricing or other calculated future value variable. Typically such outputs are represented as a function of time with increases represented by a rising slope and decreases represented by a falling slope in the curve.

An analysis may directly or indirectly follow from the representation of output (6-4). The analysis may include mathematical or textual consideration of the variables in relation to the output and/or an overall macroeconomic global chemical industry production and/or any other business economic index.

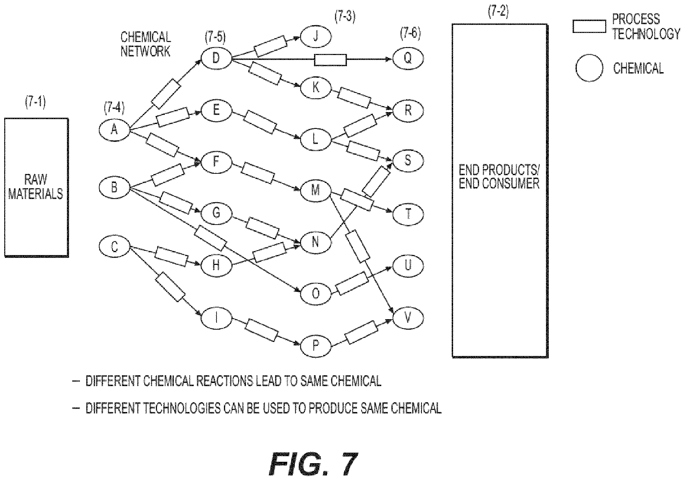

A further representation of the interrelatedness that is characteristic of the global chemical industry is shown in Figure 7. Feedstock inputs are represented as raw materials (7 1) on the left-hand side of the drawing. The raw materials are converted to useful and commercially valuable materials that are represented as end products, consumer products and/or intermediates (7-2). This transformation of raw materials or feedstocks into valuable materials occurs by processing through the chemical network (7-3). A plurality of processes or products such as "A" (7-4) are shown (see the circled letters in Figure 7). The chemical compound "A" may be subject to processing in one or more systems or processes to lead to or form one or more intermediates (e.g., "D" (7-5)). Intermediates may be further processed to form other intermediates which are even further processed to form one or more final products (e.g., "Q" - "V" (7-6)). In this manner a series of product cycles or value chains such as A-D-K-R; A-E-L-R; B-F-M-V; and/or C-I-P-V can be represented. As noted before and as shown in Figure 1, the value chains bridge one another and interconnect or interlink through one or more processes, feedstocks, intermediates or finished products. Only by considering the interrelatedness and product line cross-effects of different product cycles and value chains is it possible to develop a business and/or production planning methodology having representational accuracy to the global chemical industry.

In a preferred embodiment of the present invention, the dynamic chemical industry model therefore includes a plurality of value chains representing transformation of one or more raw materials into one or more product outputs.

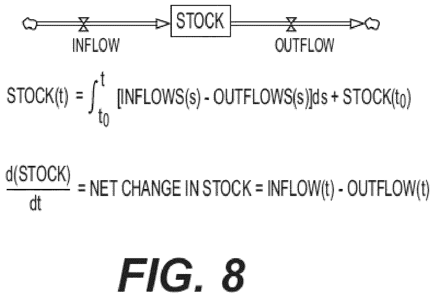

Any individual product cycle or value chain can be represented as a function of one or more variables. Preferably such variables are directly related to the underlying process, feedstock inputs and/or products. For example, a product cycle or value chain can be represented in terms of its stoichiometry. In this respect a particular molar or weight basis of feedstock inputs or intermediates is balanced with outputs in terms of products and intermediates and waste. Overall the stoichiometry of the inputs and outputs must balance. For example in a process for making propylene oxide inputs may include propene and oxygen. The total amount of propene and oxygen consumed as inputs must balance with the amount of propylene oxide, intermediates and waste produced. The stoichiometric balance is of course affected by the yield of the process and thus the relative quantities of the desired product, intermediates and waste products depend on the efficiency and precision of the process (e.g., a yield factor). Alternately the process can be balanced or represented in terms of inputs such as energy or man hours, or in economic terms whereby the cost of inputs is balanced by the cost of operations, cost of capital, profit and/or revenue from outputs. This balancing effect may be represented in one aspect of the present disclosure as shown in Figure 8. In this simplified representation a dynamic model of inventory change is presented. Inflow (preferably the finished product but also representative of generic feedstocks) is processed and "stock" is formed. As stock is sold or otherwise disposed it represents outflow. The inflow and outflow of the product cycle/value chain must balance over time. Likewise, inflows and outflows must balance temporally to reflect changes in process restrictions, inventory capacity and transport restrictions to end users. The simplified model shown in Figure 8 can be repeated to cover all possible inflows and outflows to thereby represent a cumulative inventory flow model having predictive or planning value for a company in the global chemical industry.

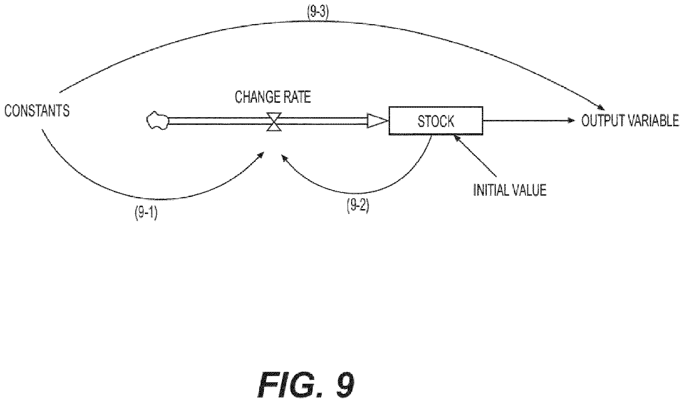

Figure 9 describes how external forces or variables can affect the flow of inventory. On a first level, a series of constants or semi-constants may be used to describe, for example, the production velocity or rate of production of a particular chemical material or modified feedstock. On the simplest level this represents a linear description of output of stock per unit time. Rarely is it the case, however, that the chemical industry is able to operate under conditions in which a production variable may be held constant over time. External factors such as consumer demand and regulatory restrictions may change the rate of production and thereby change the rate at which a product is placed into inventory. Likewise, feedback factors can have effects on the rate of production. For example, if the capacity for storing a particular chemical product has been reached, the rate of formation of the product may be slowed or stopped until the inventory or stock has been depleted to the point where additional material or production capacity may be added to stock. This represents a first feed-back loop that affects the particular variable of the process described in Figure 9. For the global chemical industry there are many such feedback loops many which can add additional levels of complexity and interrelatedness between different processes. A simple linear constant conversion factor representing conversion of feedstock inputs to outputs must therefore be modified to include the transition rate of the finished product into inventory, then a next level of variable representing the effect of inventory capacity on the formation of material from feedstock (9-2) must be taken into consideration.

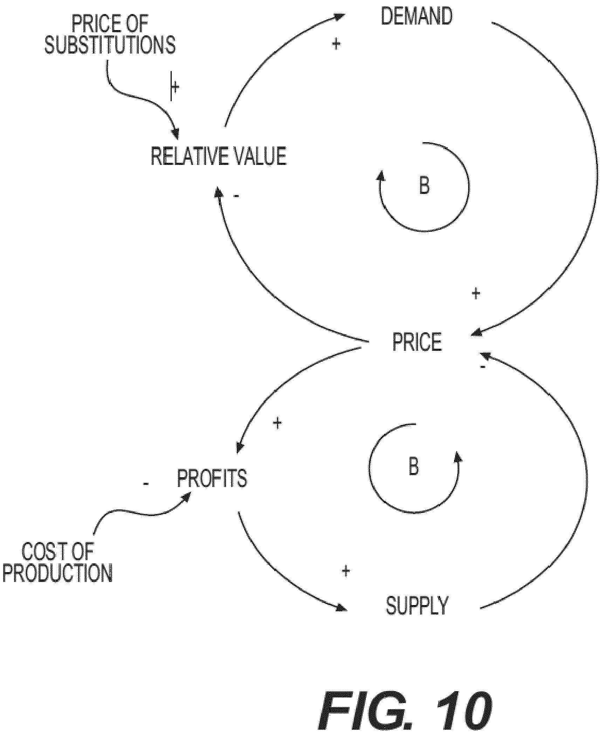

Feedback loops are further described in Figure 10 with respect to the interrelationship between price, demand and supply. Different variables affect these cycles. In the simplified depiction shown in Figure 10 outside variables such as the price of substitutes may have a direct impact on the demand of the product formed in the product cycle. An increase in demand may generally be correlated with an increase in price. However, if the cost of production can be reduced and supply is concurrently increased, the overall effect on price may be neutral. Figure 10 therefore shows the interrelatedness of supply and demand with respect to price and the effect of outside variables such as the availability of substitutes and cost of production. Figure 10 again represents a simplified depiction of a limited business environment of a particular product cycle or value chain. Such simplified depictions may be repeated many times in order to get a fuller picture of the global chemical industry.

In another alternative embodiment, the one or more chemical network values is one or more of a forecasted demand, a forecasted price and a forecasted capacity utilization.

Production and/or business planning/forecasting preferably include at least the following variable inputs and/or determinants: cost calculation, production, demand, trade and price. The cost calculation component includes several subcomponents including the cost of investment, cost of capital, and/or overall cost of production (may be inclusive of a series of variable and fixed costs such as energy, depreciation, feedstocks, cost of labor, and the like). Preferably a profit calculation or profit variable is included in the overall cost calculation component. The purpose of the profit calculation is to provide help determine whether a particular chemical process and/or value chain may be operated efficiently (profitably) (i) when considered in isolation and (ii) when subject to variables outside the immediate value chain and/or (iii) when interlinked with other value chains. The production component is intended to be reflective at least in part of production scheduling and production capacity. Increases in capacity such as from expansions and gains in efficiency may be represented as well as a name plate capacity for particular product cycle or value chain components. Downtime of production represented by plant shutdowns, repair, upgrade and unexpected disturbances such as storms and natural causes may also be taken into account. Importantly, because the global chemical industry is preferably taken into account, the projected dates that particular value chains or production facilities are retired or mothballed may be represented by a timeline or expected lifetime.

The demand component includes several aspects in addition to the current demand for a product or service. On a high level it represents the global usage or consumption of a particular material when considered overall in the global chemical industry. Preferably the global value is distinguished regionally, by product, by end use, and by its interrelatedness with other value chains or product cycles that make up a part of the global chemical industry. Future values of demand may be modeled or simulated by changing the sensitivity of global variables and by representing the likelihood of substitutes from one product chain into another.

The trade component is representative of macroeconomic conditions such as those that affect cross-border trade. Duties and tariffs may be included as representative of hindrances to transport of materials across borders. Political considerations and regulatory issues may also be included as portions of the trade component. Transportation costs may also be included in this category and may relate to costs for transport over land, over water or by air. Other trade costs may be reflected as opportunity costs. For example, trade with one nation may restrict trade with another nation and such restrictions may act as a bottleneck to global supply.

Therefore, in an alternative embodiment, the dynamic global industry model is a model of cross-border trade in the chemical industry.

In another alternative embodiment, the dynamic global industry model is a model of global chemical industry trade.

The price component represents the market price of the product throughout its value chain or product cycle. A value chain may have several pricing points. A first pricing point may relate to the internal or external sale of a purified form of a feedstock material that is received as a raw material in impure form. Pricing also includes pricing for intermediates that are taken away from the value chain and are used as feedstocks or substitutes for other products in other value chains. Pricing is not represented as a static component but is instead variable over both product portfolios and as a function of time. Pricing is often reflected or interrelated with demand and cost of production. Preferably pricing takes into account aspects of the cost calculation, production and/or trade considerations. Pricing is preferably set at a level in which a profit is achieved over the cost of capital and over reductions in value of income related to inflation.

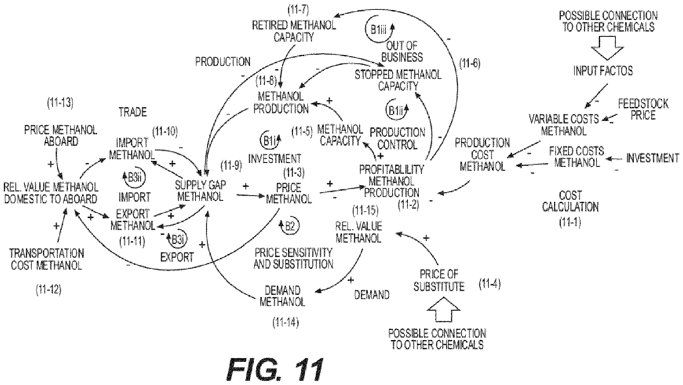

Figure 11 represents a representation of a particular product cycle and/or value chain of methanol. Additional variables, product cycles or factors may be included in Figure 11 although the general flow shown in Figure 11 encompasses most variables for this material. Costs represent a flow of components (11-1) which have an effect on the overall profitability of the production of methanol. Costs, as shown in Figure 11, include raw material prices, cost of capital, fixed costs, variable costs and the production costs. Other costs including a carbon tax or regulatory related costs may likewise be included if necessary. As it is presented in Figure 11 the central feature of this value chain is the price of methanol which is desirably low in an industry in which several large methanol producers operate.

The price of methanol is directly related to the profitability of methanol production which itself affects numerous additional variables such as methanol capacity (11-5), idled methanol capacity (11-6), and retired methanol capacity (11-7) all of which eventually have an effect on the overall production capacity for methanol (11-8). Production capacity is then linked directly to demand (11-9). Demand itself is related to several factors including cross-border trade such as import (11-10) and export (11-11). These factors are further affected by transport costs for methanol (11-12) which likewise is effected by the pricing level for methanol in other countries and, in particular, the price of methanol (11-3) as an overall component in the methanol value chain.

The price is further affected by the substitutes (11-4) and the relative value of methanol in comparison to such substitutes (11-15). This factor of price relativity and/or substitutivity is of particular importance. Substituting one chemical for another is ordinarily not merely a question of price but also a question of suitability for its intended purpose. Such substitutes directly affect only methanol but may affect other value chains because methanol is used as a feedstock for other value chains, not just the methanol value chain. When looked at overall the value chain for methanol, as represented in Figure 11, is complex and is reflective of inter-connectability, interrelatedness and substitutability with other value chains and product cycles.

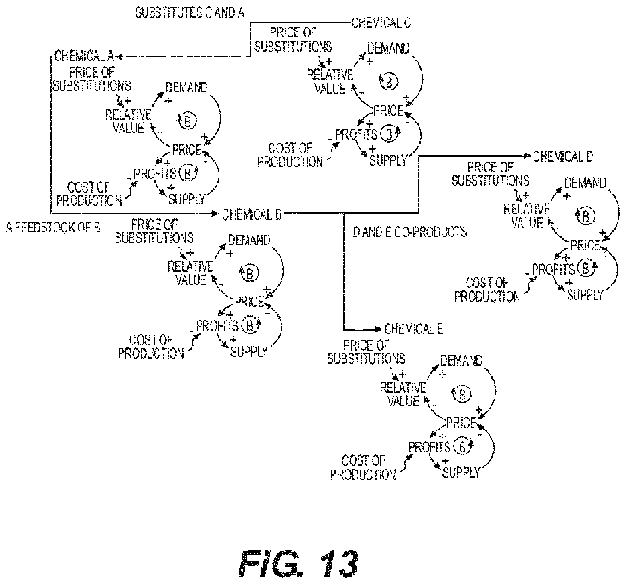

Figure 13 describes an embodiment of the disclosure in which five chemicals, product cycles or value chains are described with respect to their interrelatedness. In the depiction shown in Figure 13, simplified for convenience, the interrelated variables relate to supply, demand and price are affected by the price of substitutions and cost of production. The target products or final products for commerce are identified as Chemicals D and E which are co products made from the intermediate Chemical B which itself is made from either Chemical A and/or Chemical C which are intermediates for one another. When considered as a feedstock for the target compounds Chemicals D and E the cost component for Chemical B is itself complex because it may be derived from either Chemical A or Chemical C each of which is effected by the price of substitutions and cost of production. Further demand and supply in each of the product cycles for Chemicals A and C will affect the price of the raw material used for Chemical B. This price effect cascades to Chemicals D and E. Figure 13 illustrates the complexity and dynamic character of the chemical industry when considered on a large scale. Attempting to characterize a value chain or product cycle linearly in the absence of the effects of other product cycles is ineffective and inaccurate as a means to provide predictive value, forecasted values or calculated values that are representationally accurate of actual business circumstances. By including a plurality of interrelated product cycles and/or value chains the system of the present disclosure is able to provide substantially improved accuracy that matches more closely with actual business conditions. In a preferred embodiment, the dynamic global industry model includes one or more internal variables and one or more external variables.

In another preferred embodiment, the dynamic global industry model includes one or more internal variables corresponding with a rate of change of a first variable in relation to a second variable. Generally variables may be characterized as internal variables or external variables. An internal variable as it is used in the process or system of the present disclosure is calculated directly from inputs for particular product cycles or value chains. An internal variable can represent a value or an interrelationship between different variables. For example, based on historical data it may be determined that two variables are related to one another with respect to the likelihood of substitution such that a first variable or chemical is twice as likely to be used as a substitute in comparison to the second variable or chemical. This likelihood of substitution is an internal variable calculated from historical and present data utilizing the system of the present disclosure. In some embodiments the internal variable relating to the aforementioned substitutability can be expressed mathematically such that it becomes a part of the computation or algorithm representing the global chemical industry.

Other internal variables include production costs including variables such as fixed costs, investment costs and the change of investment costs such as internal rate of return (IRR), regional production weighting, regional demand calculations, capacity utilization and calculated supply gap. Interregional trade factors and transport costs may either be internal or external variables. In an embodiment of the disclosure where such costs are internal variables, the costs are calculated based upon other data such as comparative data relating price and cost of manufacture across borders or between areas of trade. Product substitution may be an internal variable determined based at least in part upon comparative pricing or availability characteristics. Likewise, price sensitivity of demand may be an internal variable which is dependent upon capacity, demand and pricing. Regional chemical pricing and/or anomalies in regional chemical pricing may be an internal calculation based on comparative data or comparative evaluations across trade routings, localities or types of production processes. Regional profitability of certain process technologies can also be calculated on a comparative basis and may thus represent internal variables.

The internal variables are commonly calculated from data that is directly related to process data (at a manufacturing, inventory or supply level), market data (from internal sales, observed sales or market intelligence) and supply chain factors such as trading cost and taxes which are observed directly from participants in particular markets. Other internal data may be obtained from consultants or experts and/or from governmental or industry organizations such as the American Chemical Conference. Likewise, economic data from sources such as the World Bank may be used as a basis for variables such as GDP growth, inflation and energy prices.

External variables, contrary to internal variables, are not a function or calculated result directly from the system or process of the present disclosure. External variables are ordinarily entered based upon observation. For example, the current pricing level or historical pricing level of a particular chemical is not calculated from the process or system of the present disclosure but is instead an objective value that is entered and utilized as part of the calculation and/or manipulated by the underlying algorithm. A variable may also represent a constant. For example economic growth represented by GDP growth is typically a variable over time. However, an average growth rate can be used as a constant in place of a more complex day-by-day or year-by-year determination of a particular GDP growth rate. Other variables such as production cost, energy cost, production capacity and cost of capital are all external variables that are typically entered as a basis into the system or process at initiation of a particular production planning or business planning session. External variables include such factors such as regional growth rate (e.g., region GDP growth rate), GDP intensity of demand growth for chemicals, regional pricing for feedstocks such as oil, gas, coal and electricity or for regulatory-focused pricing such as carbon taxes. Expected profitability or IRR for particular product cycles or value chains, or alternately for production localities may be treated as an external variable is so specified. Process intensities such as capacity utilization may be an external variable in combination with initial production values such as main plate capacity.

In a preferred embodiment of the present invention, at least one internal variable includes a material balance between a first feedstock material and a first output product, and an external variable representing industry demand for the first output product.

In some embodiments the present disclosure relates to a method and/or system which use models to simulate, model or game the global chemical industry by utilizing internal and external variables across a plurality of product cycles and/or value chains reflective of global trade in the chemical industry. The model, game or simulation relies on interlinking and interrelatedness of chemical processes such as the utilization of the product of an upstream process as a feedstock for a downstream process and substitutes of processes for processes and different products. Each product cycle and/or value chain may be represented as an independent unit or may be modeled as a cumulative unit depending on locality, process technology, and market utilization or other determinant. Cumulative treatment may provide a simplified simulation or model whereas individual treatment provides greater detail and predictive value for local or specialized circumstances.

The method and/or system is able to take into account the interrelatedness and interlinking of a plurality of processes that may be interlinked or related vertically or horizontally. Vertical relatedness corresponds to circumstances in which a product of an upstream process is used as the input or feedstock for a downstream process. Horizontal integration relates to processes that may be interchanged to form the same product or a substitute for a product using the same or similar processes. Horizontal relatedness also refers to functional substitutes either product-based or process-based. In a preferred embodiment of the invention the method and/or system is used for production planning, business planning, or more specialized planning such as inventory planning, raw material planning and market planning. A series of critical data values may be obtained including inventory levels, feedstock demand, transport costs, capacity utilization and trends for changes moving forward in time. Inventory planning is especially useful and may provide a global chemical company with a flexibility to reallocate production across borders as a means to minimize inventory costs. The method and system may be further utilized for reducing working capital, improving quality, improving product life cycle, decreasing inventory costs, decreasing product transition costs and generally managing demand, supply and profitability.

The method and system of the present disclosure can advantageously be used together with software programs such as enterprise resource planning methods and systems. While such known systems are useful for planning for particular areas of a chemical business and include control systems, production systems, quality assurance systems, asset maintenance systems, accounting systems and the like, they are deficient with respect to providing a real time and/or predictive picture of the global chemical industry and how changes in one or more factors may influence operational performance and/or business opportunities. The method and system of the present disclosure is further different from advanced planning and scheduling (APS) systems and methods which, while may be focused on a particular industry, relate more to finding a single solution to a complex system of business priorities rather than an overview that coordinates inputs, outputs and external factors with a series of process and business variables to provide a description, both quantitative and subjective, of a global business in response to changes in inputs or business strategy.

In a preferable embodiment of the invention the system and method are carried out with a system dynamics approach, calculation and/or algorithm methodology. System dynamics permits the interaction of various relationships and variables to be interactively modeled and quantified relative to one another. Particular interactions, and in the chemical industry chemical transformations, can be represented by reactive loops (e.g., causal loops) where inputs are related to outputs. In the chemical industry such inputs may represent raw materials and feedstocks whereas outputs typically represent finished chemical products. The chemical industry includes many interlinked reactive loops where products of a first loop become the input for a second loop and the product of the second loop becomes an input for a product of a further loop. The interaction of different loops is thus representative, graphically and mathematically, through interconnectivity of loops.

Such loops are typically defined by initial conditions (for example a condition at t0) and subsequent conditions at a later time (t1). Particular mathematical methodologies may be applied to determine a discrete balanced system at any particular time. Because such complex systems do not remain balanced, a system dynamics approach provides a predictive value that aids in planning for continuous time operations.

The loops of system dynamics analysis may be represented mathematically and/or algorithmically, individually (e.g., for a single loop) or cumulatively as a group of serial and/or parallel loops. The interaction of such loops represented by mathematical processes and algorithms permits large scale simulation and modeling of complex systems. The loops and underlying algorithms and processes are each individually affected by a series of separate variables, and therefore the effects of particular variables and the sensitivity of variables on the loop performance, local or global, can be quantified.

It is one aspect of the present disclosure that the method and system not include an iterative or repetitive analysis of business variables in an attempt to identify an optimum solution. Preferably the method and system function to provide an objective and reactive picture of a global industry where such picture is reactive and reflective of inter-conductivity and interrelatedness between different chemical processes and products across the world. The system and method of the present disclosure also does not seek to identify or replicate an optimal business objective but instead to determine effects such as ripple effects that may derive from changes in the industry or activities of one or more global chemical companies and/or macroeconomic forces and political forces in addition to basic business forces such as supply and demand.

In another aspect the method and system do not operate under a game theory in which a plurality of chemical companies are modeled and compete against one another to identify an optimum solution with respect to any of a market position, profitability or leadership in any internal variable. The present invention is also related to a data processing system comprising a processor adapted to perform the steps according to the method of the present invention.

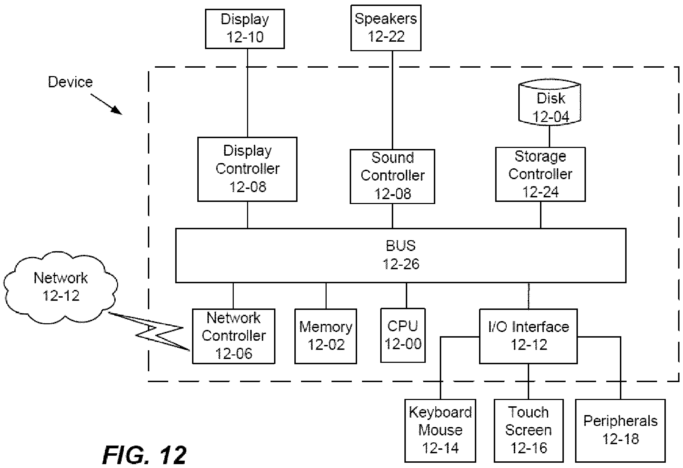

Next, a hardware description of the system according to exemplary embodiments is described with reference to Figure 12. In Figure 12, the system includes a CPU 12-00 which performs the processes described above/below. The process data and instructions may be stored in memory 12-02. These processes and instructions may also be stored on a storage medium disk 12-04 such as a hard drive (HDD) or portable storage medium or may be stored remotely. Further, the claimed advancements are not limited by the form of the computer-readable media on which the instructions of the inventive process are stored. For example, the instructions may be stored on CDs, DVDs, in FLASH memory, RAM, ROM, PROM, EPROM, EEPROM, hard disk or any other information processing device with which the system communicates, such as a server or computer. In a further aspect, the present invention is related to a computer-readable storage medium comprising instructions which, when executed by a computer, cause the computer to carry out the steps of the method according to the present invention.

Further, the claimed advancements may be provided as a utility application, background daemon, or component of an operating system, or combination thereof, executing in conjunction with CPU 12-00 and an operating system such as Microsoft Windows 7, UNIX, Solaris, LINUX, Apple MAC-OS and other systems known to those skilled in the art.

Therefore, the present invention also relates to a computer program product comprising instructions which, when the program is executed by a computer, cause the computer to carry out the method steps described above.

The hardware elements in order to achieve the system may be realized by various circuitry elements, known to those skilled in the art. For example, CPU 12-00 may be a Xenon or Core processor from Intel of America or an Opteron processor from AMD of America, or may be other processor types that would be recognized by one of ordinary skill in the art. Alternatively, the CPU 12-00 may be implemented on an FPGA, ASIC, PLD or using discrete logic circuits, as one of ordinary skill in the art would recognize. Further, CPU 12-00 may be implemented as multiple processors cooperatively working in parallel to perform the instructions of the inventive processes described above.

The system in Figure 12 also includes a network controller 12-06, such as an Intel Ethernet PRO network interface card from Intel Corporation of America, for interfacing with network 12-12. As can be appreciated, the network 12-12 can be a public network, such as the Internet, or a private network such as an LAN or WAN network, or any combination thereof and can also include PSTN or ISDN sub-networks. The network 12-12 can also be wired, such as an Ethernet network, or can be wireless such as a cellular network including EDGE, 3G and 4G wireless cellular systems. The wireless network can also be WiFi, Bluetooth, or any other wireless form of communication that is known.

The system further includes a display controller 12-08, such as a NVIDIA GeForce GTX or Quadro graphics adaptor from NVIDIA Corporation of America for interfacing with display 12-10, such as a Hewlett Packard HPL2445w LCD monitor. A general purpose I/O interface 12-12 interfaces with a keyboard and/or mouse 12-14 as well as a touch screen panel 12-16 on or separate from display 12-10. General purpose I/O interface also connects to a variety of peripherals 12-18 including printers and scanners, such as an OfficeJet or DeskJet from Hewlett Packard.

A sound controller 12-20 is also provided in the system, such as Sound Blaster X-Fi Titanium from Creative, to interface with speakers/microphone 12-22 thereby providing sounds and/or music. The general purpose storage controller 12-24 connects the storage medium disk 12-04 with communication bus 12-26, which may be an ISA, EISA, VESA, PCI, or similar, for interconnecting all of the components of the system. A description of the general features and functionality of the display 12-10, keyboard and/or mouse 12-14, as well as the display controller 12-08, storage controller 12-24, network controller 12-06, sound controller 12-20, and general purpose I/O interface 12-12 is omitted herein for brevity as these features are known.

Obviously, numerous modifications and variations of the present invention are possible in light of the above teachings. It is therefore to be understood that within the scope of the appended claims, the invention may be practiced otherwise than as specifically described herein.

## Claims

1. A computer-implemented method for production planning, comprising:
saving a dynamic global industry model into a memory of a computer system, wherein the dynamic global industry model has a plurality of variables corresponding with objective historical data at a time t0,
inputting at least one changed value representing a future time t1 for one or more of the variables,
processing, using processing circuitry of the computer system, based on the dynamic global industry model and the variables at times t0 and t1, one or more chemical network values, and
outputting a production plan based on the chemical network values.

2. The method according to claim 1, **characterized in that** the processing includes representing the dynamic global industry model with a plurality of interrelated material flows.

3. The method according to claim 1 or 2, **characterized in that** the plurality of global variables are interrelated such that a change in a first variable changes both a first output and a second output, wherein the first output changes linearly with the first variable, and the second output changes non-linearly with the first variable and linearly with a second variable.

4. The method according to any one of the preceding claims, **characterized in that** the dynamic global industry model is a model of cross-border trade in the chemical industry.

5. The method according to any one of the preceding claims, **characterized in that** the dynamic global industry model is a model of global chemical industry trade.

6. The method according to any one of the preceding claims, **characterized in that** the dynamic global industry model includes one or more internal variables and one or more external variables.

7. The method according to any one of the preceding claims, **characterized in that** the dynamic global industry model includes one or more internal variables corresponding with a rate of change of a first variable in relation to a second variable.

8. The method according to any one of the preceding claims, **characterized in that** at least one internal variable includes a material balance between a first feedstock material and a first output product, and an external variable representing industry demand for the first output product.

9. The method according to any one of the preceding claims, **characterized in that** the one or more chemical network values is one or more of a forecasted demand, a forecasted price and a forecasted capacity utilization.

10. The method according to any one of the preceding claims, **characterized in that** the dynamic chemical industry model includes a plurality of value chains representing transformation of one or more raw materials into one or more product outputs.

11. A data processing system comprising a processor adapted to perform the steps of the method of any one of the preceding claims.

12. A computer program product comprising instructions which, when the program is executed by a computer, cause the computer to carry out the steps of the method of any one of claims 1 to 10.

13. A computer-readable storage medium comprising instructions which, when executed by a computer, cause the computer to carry out the steps of the method of any one of claims 1 to 10.
